# EUROPEAN PATENT APPLICATION

(11) **EP 3 650 639 A1**
(43) Date of publication of application: **13.05.2020**
(21) Application number: 19213319.7
(22) Date of filing: 11.07.2018
(51) Int. Cl.: F01D 5/14, F01D 5/18, F01D 9/04

(54) **SHIELD FOR A TURBINE ENGINE AIRFOIL**

(30) Priority: 19.07.2017 US 201715653789
(62) Divisional of application: 18183001.9
(71) Applicant: General Electric Company, Schenectady, NY 12345 (US)
(72) Inventor: MANNING, Robert Francis, Lynn, MA Massachusetts 01910-0002 (US); BROOMER, Mark, Lynn, MA Massachusetts 01910-0002 (US); CORSETTI, Brian Kenneth, Lynn, MA Massachusetts 01910-0002 (US)
(74) Representative: Openshaw & Co.

(57) **Abstract**

An airfoil 105, 205 for a turbine engine 10 can include a body 110, 210 having an outer wall 111, 211 defining a pressure side 112, 212 and a suction side 114, 214, and the body 110, 210 can extend axially between a truncated nose 116, 216 and a trailing edge 118, 218. A shield 120, 220 can be positioned upstream of the nose 116, 216 to define a leading edge 122, 222 for the airfoil 105, 205.

## Description

### BACKGROUND

Turbine engines, and particularly gas or combustion turbine engines, are rotary engines that extract energy from a flow of pressurized combusted gases passing through the engine onto a multitude of rotating turbine blades.

Gas turbine engines for aircraft are designed to operate at high temperatures to maximize engine efficiency. It can be beneficial to cool engine components in high-heat environments, in addition to providing additional thermal protection for these components.

### BRIEF DESCRIPTION

In one aspect, an airfoil for a turbine engine comprises a body having an outer wall defining a pressure side and a suction side opposite the pressure side, the outer wall enclosing an interior and extending axially between a truncated nose and a trailing edge, and a shield positioned upstream of the nose to define a leading edge for the airfoil, with the shield spaced from the nose to define a gap between the body and the shield.

In another aspect, an airfoil assembly for a turbine engine comprises radially spaced inner and outer bands and a plurality of airfoils extending between the inner and outer bands, with at least one of the airfoils comprising a body having an outer wall defining a pressure side and a suction side opposite the pressure side, the outer wall enclosing an interior and extending axially between a truncated nose and a trailing edge, and a shield positioned upstream of the nose to define a leading edge for the airfoil, with the shield spaced from the nose to define a gap between the body and the shield.

In yet another aspect, a method of cooling an airfoil in a turbine engine comprises introducing cooling air from an interior of the airfoil into a gap between a shield forming a leading edge of the airfoil and a truncated nose of an airfoil body forming pressure and suction sides of the airfoil, and flowing the cooling air from the gap along at least one of the pressure and suction sides.

### BRIEF DESCRIPTION OF THE DRAWINGS

In the drawings:
FIG. 1 is a schematic cross-sectional diagram of a turbine engine for an aircraft including an airfoil assembly with an airfoil according to various aspects as described herein.
FIG. 2 illustrates a radial cross-sectional view of the airfoil assembly of FIG. 1 including an airfoil according to one aspect.
FIG. 3 is a cross-sectional view of the airfoil of FIG. 2 taken along the line 3-3.
FIG. 4 illustrates airflows through and around the airfoil of FIG. 3.
FIG. 5 illustrates a radial cross-sectional view of the airfoil assembly of FIG. 1 including an airfoil according to another aspect.
FIG. 6 is a cross-sectional view of the airfoil of FIG. 5 taken along the line 6-6 and illustrates airflows through and around the airfoil.

### DETAILED DESCRIPTION

The described embodiments of the present disclosure are directed to a shield for an airfoil for a turbine engine. For purposes of illustration, the present disclosure will be described with respect to the turbine for an aircraft turbine engine. It will be understood, however, that the disclosure is not so limited and may have general applicability within an engine, including compressors, as well as in non-aircraft applications, such as other mobile applications and non-mobile industrial, commercial, and residential applications.

As used herein, the term "forward" or "upstream" refers to moving in a direction toward the engine inlet, or a component being relatively closer to the engine inlet as compared to another component. The term "aft" or "downstream" used in conjunction with "forward" or "upstream" refers to a direction toward the rear or outlet of the engine or being relatively closer to the engine outlet as compared to another component.

Additionally, as used herein, the terms "radial" or "radially" refer to a dimension extending between a center longitudinal axis of the engine and an outer engine circumference.

All directional references (e.g., radial, axial, proximal, distal, upper, lower, upward, downward, left, right, lateral, front, back, top, bottom, above, below, vertical, horizontal, clockwise, counterclockwise, upstream, downstream, forward, aft, etc.) are only used for identification purposes to aid the reader's understanding of the present disclosure, and do not create limitations, particularly as to the position, orientation, or use of the disclosure. Connection references (e.g., attached, coupled, connected, and joined) are to be construed broadly and can include intermediate members between a collection of elements and relative movement between elements unless otherwise indicated. As such, connection references do not necessarily infer that two elements are directly connected and in fixed relation to one another. The exemplary drawings are for purposes of illustration only and the dimensions, positions, order and relative sizes reflected in the drawings attached hereto can vary. Furthermore, as used herein, the term "set" or "a set" of elements can refer to any number of elements, including only one.

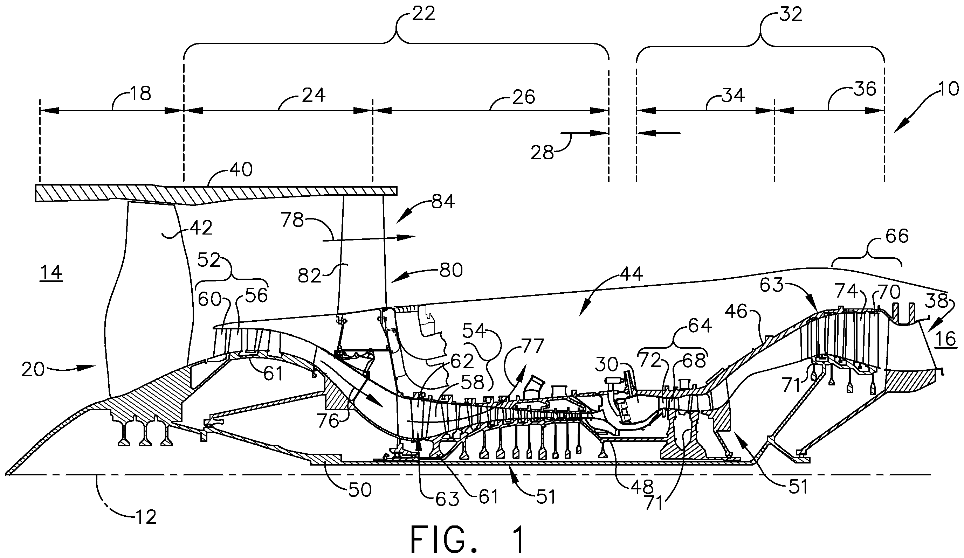

FIG. 1 is a schematic cross-sectional diagram of a gas turbine engine 10 for an aircraft. The engine 10 has a generally longitudinally extending axis or centerline 12 extending forward 14 to aft 16. The engine 10 includes, in downstream serial flow relationship, a fan section 18 including a fan 20, a compressor section 22 including a booster or low pressure (LP) compressor 24 and a high pressure (HP) compressor 26, a combustion section 28 including a combustor 30, a turbine section 32 including a HP turbine 34, and a LP turbine 36, and an exhaust section 38.

The fan section 18 includes a fan casing 40 surrounding the fan 20. The fan 20 includes a plurality of fan blades 42 disposed radially about the centerline 12. The HP compressor 26, the combustor 30, and the HP turbine 34 form a core 44 of the engine 10, which generates combustion gases. The core 44 is surrounded by core casing 46, which can be coupled with the fan casing 40.

A HP shaft or spool 48 disposed coaxially about the centerline 12 of the engine 10 drivingly connects the HP turbine 34 to the HP compressor 26. A LP shaft or spool 50, which is disposed coaxially about the centerline 12 of the engine 10 within the larger diameter annular HP spool 48, drivingly connects the LP turbine 36 to the LP compressor 24 and fan 20. The spools 48, 50 are rotatable about the engine centerline and couple to a plurality of rotatable elements, which can collectively define a rotor 51.

The LP compressor 24 and the HP compressor 26 respectively include a plurality of compressor stages 52, 54, in which a set of compressor blades 56, 58 rotate relative to a corresponding set of static compressor vanes 60, 62 to compress or pressurize the stream of fluid passing through the stage. In a single compressor stage 52, 54, multiple compressor blades 56, 58 can be provided in a ring and can extend radially outwardly relative to the centerline 12, from a blade platform to a blade tip, while the corresponding static compressor vanes 60, 62 are positioned upstream of and adjacent to the rotating blades 56, 58. It is noted that the number of blades, vanes, and compressor stages shown in FIG. 1 were selected for illustrative purposes only, and that other numbers are possible.

The blades 56, 58 for a stage of the compressor can be mounted to (or integral to) a disk 61, which is mounted to the corresponding one of the HP and LP spools 48, 50. The vanes 60, 62 for a stage of the compressor can be mounted to the core casing 46 in a circumferential arrangement.

The HP turbine 34 and the LP turbine 36 respectively include a plurality of turbine stages 64, 66, in which a set of turbine blades 68, 70 are rotated relative to a corresponding set of static turbine vanes 72, 74 (also called a nozzle) to extract energy from the stream of fluid passing through the stage. In a single turbine stage 64, 66, multiple turbine blades 68, 70 can be provided in a ring and can extend radially outwardly relative to the centerline 12 while the corresponding static turbine vanes 72, 74 are positioned upstream of and adjacent to the rotating blades 68, 70. It is noted that the number of blades, vanes, and turbine stages shown in FIG. 1 were selected for illustrative purposes only, and that other numbers are possible.

The blades 68, 70 for a stage of the turbine can be mounted to a disk 71, which is mounted to the corresponding one of the HP and LP spools 48, 50. The vanes 72, 74 for a stage of the compressor can be mounted to the core casing 46 in a circumferential arrangement.

Complementary to the rotor portion, the stationary portions of the engine 10, such as the static vanes 60, 62, 72, 74 among the compressor and turbine section 22, 32 are also referred to individually or collectively as a stator 63. As such, the stator 63 can refer to the combination of non-rotating elements throughout the engine 10.

In operation, the airflow exiting the fan section 18 is split such that a portion of the airflow is channeled into the LP compressor 24, which then supplies pressurized air 76 to the HP compressor 26, which further pressurizes the air. The pressurized air 76 from the HP compressor 26 is mixed with fuel in the combustor 30 and ignited, thereby generating combustion gases. Some work is extracted from these gases by the HP turbine 34, which drives the HP compressor 26. The combustion gases are discharged into the LP turbine 36, which extracts additional work to drive the LP compressor 24, and the exhaust gas is ultimately discharged from the engine 10 via the exhaust section 38. The driving of the LP turbine 36 drives the LP spool 50 to rotate the fan 20 and the LP compressor 24.

A portion of the pressurized airflow 76 can be drawn from the compressor section 22 as bleed air 77. The bleed air 77 can be drawn from the pressurized airflow 76 and provided to engine components requiring cooling. The temperature of pressurized airflow 76 entering the combustor 30 is significantly increased. As such, cooling provided by the bleed air 77 is necessary for operating of such engine components in the heightened temperature environments.

A remaining portion of the airflow 78 bypasses the LP compressor 24 and engine core 44 and exits the engine assembly 10 through a stationary vane row, and more particularly an outlet guide vane assembly 80, comprising a plurality of airfoil guide vanes 82, at the fan exhaust side 84. More specifically, a circumferential row of radially extending airfoil guide vanes 82 are utilized adjacent the fan section 18 to exert some directional control of the airflow 78.

Some of the air supplied by the fan 20 can bypass the engine core 44 and be used for cooling of portions, especially hot portions, of the engine 10, and/or used to cool or power other aspects of the aircraft. In the context of a turbine engine, the hot portions of the engine are normally downstream of the combustor 30, especially the turbine section 32, with the HP turbine 34 being the hottest portion as it is directly downstream of the combustion section 28. Other sources of cooling fluid can be, but are not limited to, fluid discharged from the LP compressor 24 or the HP compressor 26.

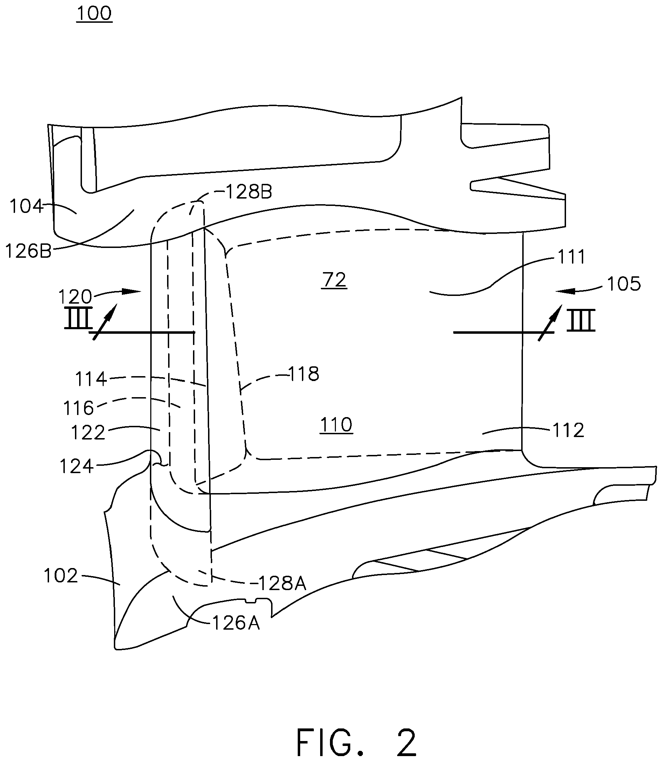

FIG. 2 illustrates a side view of an airfoil assembly 100 which comprises an inner band 102, an outer band 104 radially spaced from the inner band 102, and a plurality of airfoils 105 extending between the bands 102, 104 as shown. At least one of the airfoils 105 can include a body 110 (illustrated as the HP turbine vane 72) with an outer wall 111 that can extend in a span-wise direction to define a pressure side 112 and suction side 114 opposite the pressure side 112. The outer wall 111 can also extend in an axial direction between a truncated nose 116 and trailing edge 118. It will be understood that while illustrated as the vane 72, the disclosure is not so limited and the airfoil body 110 can include any airfoil within the turbine engine 10 including within the compressor section 22 or turbine section 32 (FIG. 1).

The airfoil 105 can also include a shield 120 positioned upstream of the truncated nose 116, and the shield 120 can have a shape or profile that defines a leading edge 122 of the airfoil 105. The shield 120 can also be spaced from the nose 116 of the body 110 to define a gap 124 as shown. It is contemplated that the material used for the shield 120 can have a higher temperature capability than the material used for the body 110, wherein the temperature capability can be defined as the highest operating temperature contemplated for use for a given material in the turbine engine environment, and subjecting the material to temperatures higher than its temperature capability can cause effects such as oxidation, fatigue, or melting of the material. For example, the shield 120 can be made of ceramic matrix composite (CMC) or monolithic ceramic while the body 110 can be made of metal having a lower temperature capability than the insert material. However, such examples are not meant to be limiting and any material suitable for the turbine engine environment is contemplated for use in this disclosure.

Furthermore, the shield 120 can include higher-temperature-capability material at the leading edge 122 only, or throughout the entire shield 120, in non-limiting examples.

It is contemplated that the shield 120 can be mounted between the inner band 102 and outer band 104 in order to define the gap 124. In one example, a tongue-and-groove mounting can be used where the inner band 102 can include a first groove 126A capable of receiving a first tongue 128A of the shield 120, and the outer band 104 can include a second groove 126B for receiving a second tongue 128B of the shield 120. It will be understood that other mountings can be used to secure the shield 120 within the airfoil assembly 100. Furthermore, the shield 120 can be mounted in any desired order during assembly; in a non-limiting example the shield 120 can be first mounted to the inner band 102 by inserting the first tongue 128A into the first groove 126A, and the outer band 104 can then be secured to the shield 120 by inserting the second tongue 128B into the second groove 126B.

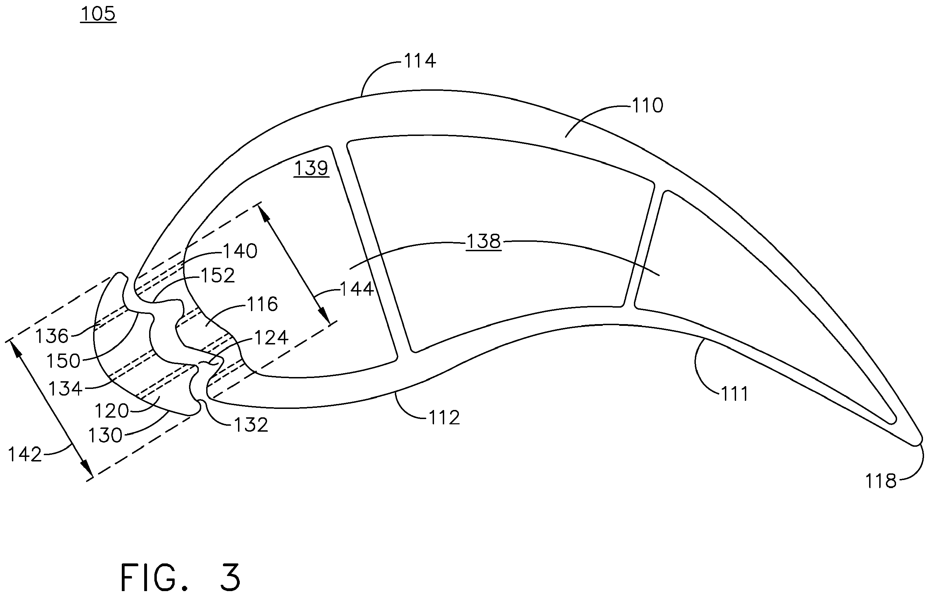

Turning to FIG. 3, the shield 120 of the airfoil 105 can further comprise an upstream surface 130, downstream surface 132, and an apex 134, where the apex 134 can be positioned on the upstream surface 130, and where the downstream surface 132 confronts the nose 116 as shown. A set of film holes 136 can extend through the shield 120 from the downstream surface 132 to the upstream surface 130 as shown, and can be formed in the shield 120 utilizing any desired method such as drilling.

The outer wall 111 of the airfoil 105 can enclose an interior 138 as shown, and at least one airfoil cooling passage 139 within the interior 138 can supply cooling air to the airfoil 105. A set of cooling holes 140 can extend through the outer wall 111 and fluidly couple the interior 138 to the gap 124. It will be understood that slots or other transpiration cooling methods can be utilized in place of the set of cooling holes 140.

Furthermore, it is contemplated that the use of film holes 136 and cooling holes 140 can depend on a position of the airfoil 105 within the turbine engine 10 (FIG. 1). While illustrated as being included in both the truncated nose 116 and the shield 120, in non-limiting examples the film holes 136 and cooling holes 140 can be utilized in an airfoil 105 in a Stage 1 or Stage 2 turbine nozzle, or the film holes 136 and cooling holes 140 can be optionally provided in airfoils 105 in additional downstream stages.

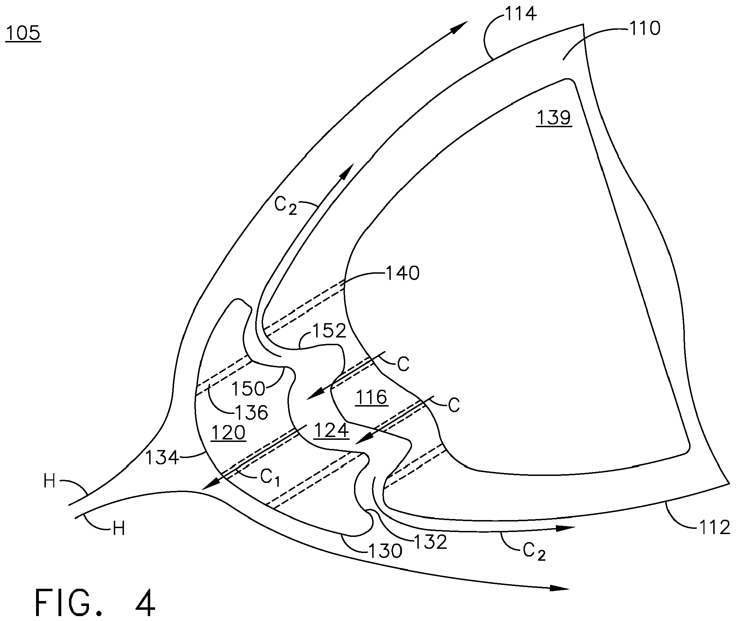

The gap 124 between the shield 120 and body 110 is illustrated in the example of FIG. 4 as comprising a continuous gap 124, where a span-wise extent 142 of the shield 120 can be greater than or equal to a span 144 of the nose 116 in forming the gap 124 as shown. Furthermore, the gap 124 can also comprise multiple discrete gaps 124 across the span 144 of the nose 116, or multiple discrete gaps 124 along the leading edge 122 of the airfoil 105, in non-limiting examples. In such a case, it should be understood that the shield 120 may contact the body 110 at a different cross-sectional plane than that illustrated by the section line 3-3 (FIG. 2). Furthermore, the shield 120 can be mounted to any or all of the airfoil 105, inner band 102, or outer band 104 as desired.

The downstream surface 132 of the shield 120 can further include a set of shield surface features 150, and the nose 116 of the body 110 can include a set of nose surface features 152 as shown. The surface features 150, 152 can be formed by casting, machining, or any other desired method as appropriate; in non-limiting examples the surface features 150, 152 can be shaped with a complementary geometry, or the nose surface features 152 can be essentially smooth while the shield surface features 150 can include a curved or wavy profile. It will be understood that any desired geometry or shaping can be used for the surface features 150, 152 on the shield 120 or nose 116.

In operation, a hot airflow *H* can impinge the apex 134 of the shield 120 and be redirected along the pressure side 112 or suction side 114 of the body 110 as shown in FIG. 4. In addition, a cooling airflow *C* can move through the cooling holes 140 and into the gap 124. A first portion *C*1 of the cooling airflow *C* can move through the film holes 136 toward the upstream surface 130 of the shield 120, cooling the shield 120 from the hot airflow *H.* A second portion *C*2 of the cooling airflow *C* can be directed through the gap 124 and along the pressure or suction sides 112, 114 to aid in cooling the body 110 from the hot airflow *H.* The surface features 150, 152 can also be designed to help direct the second portion *C*2 tangentially along the pressure or suction sides 112, 114 for more efficient use of the cooling airflow *C.* It is further contemplated that the upstream surface 130 can be formed to transition smoothly to the pressure and suction sides 112, 114, such that the first portion of cooling air *C1* can flow along the upstream surface 130 and join the second portion *C2* to provide additional cooling to the airfoil 105.

The turbine engine 10 can further comprise another airfoil assembly 200 according to a second aspect of the disclosure. The airfoil assembly 200 is similar to the airfoil assembly 100, therefore, like parts will be identified with like numerals increased by 100, with it being understood that the description of the like parts of the first aspect applies to the second aspect, unless otherwise noted.

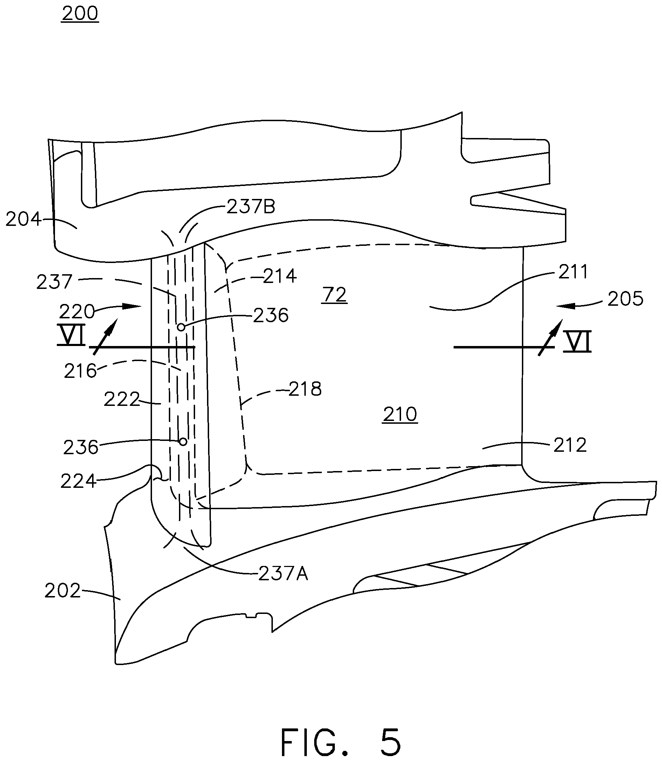

Turning to FIG. 5, the airfoil assembly 200 can comprise an inner band 202, an outer band 204, and a plurality of airfoils 205 extending between the bands 202, 204 as shown. At least one of the airfoils 205 can include a body 210 (illustrated as the HP turbine vane 72) with an outer wall 211 extending in a span-wise direction to define a pressure side 212 and suction side 214. The outer wall 211 can also extend in an axial direction between a nose 216 and trailing edge 218. The airfoil 205 can also include a shield 220 positioned upstream of the nose 216 such that the shield 220 defines a leading edge 222 of the airfoil 205, and the shield 220 can also be spaced from the body 210 to define a gap 224 as shown. The shield 220 can further include a set of film holes 236 as well as a set of interior shield cooling passages 237, which can be fluidly coupled to an inner band passage 237A and an inner band passage 237B as shown.

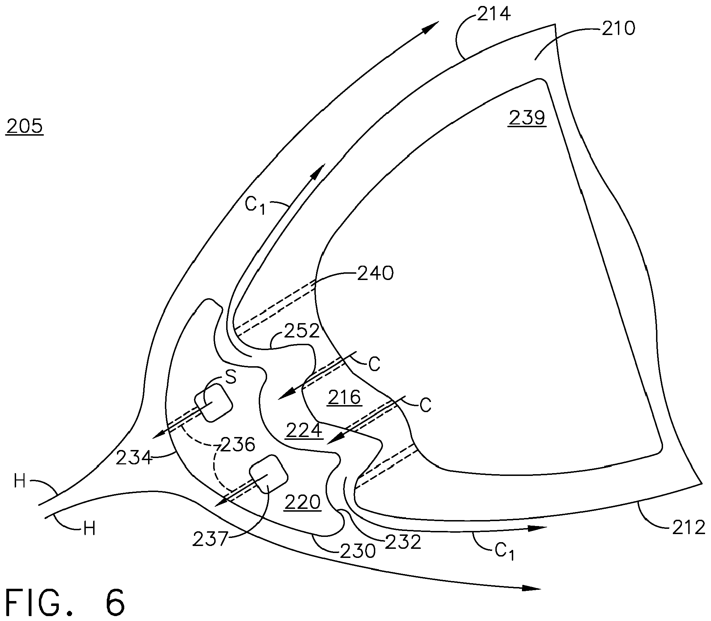

FIG. 6 illustrates airflows in and around the airfoil 205, where it can be seen in operation that a hot airflow H can impinge an apex 234 of the shield 220 and flow to the pressure and suction sides 212, 214. Cooling air S supplied by the inner or outer band passages 237A, 237B (FIG. 5) can flow into a shield cooling passage 237, pass through a film hole 236, and flow toward an upstream surface 230 of the shield 220 as shown. It should be understood that the film hole 236 can also extend to the gap 224, and can also be used to fluidly couple the shield cooling passage 237 to any desired portion such as a downstream surface 232 of the shield 220, or any region exterior to the shield 220, in non-limiting examples. In addition, a cooling airflow *C* can be directed from the an interior 239 of the body 210, through cooling holes 240 in the body 210, and into the gap 224, where a first portion *C1* of the cooling airflow *C* can be directed to the pressure side 212 or suction side 214 to aid in cooling the body 210.

A method of cooling the airfoil 105, 205 can include flowing cooling air through the film holes 136 in the shield 130 (FIG. 4), which is spaced upstream of the airfoil body 110. Cooling air can flow from the interior 138 through the cooling holes 140 and into the gap 124 (FIG. 4), and then from the gap 124 into the film holes 136 or along a portion of the body 110, which can add to film cooling effects from other downstream film holes (not shown) in the pressure or suction sides 112, 114. Cooling air can also be supplied to the interior shield cooling passages 237 (FIG. 6) and directed through the film holes 236 (FIG. 6) to cool the airfoil 105, 205.

Aspects described in the present disclosure can provide for a variety of benefits. The shield's higher temperature capability can reduce the heat load on the airfoil and protect the airfoil nose from direct impingement of hot gases within the turbine engine, which can prolong the life of the airfoil. It can be appreciated that a reduction in heat load on the airfoil can provide for a reduced amount of cooling air supplied to interior cooling channels within the airfoil. Furthermore, the outer contour of the shield can be aerodynamically designed to replicate the surface of a non-shielded airfoil to maintain aerodynamic efficiency.

In addition, film hole production can be significantly less restrictive when film holes are created in the shield (such as by drilling, lasering, or electrical discharge machining, in non-limiting examples) prior to assembly, as radial surface angles can become restricted in regions proximate the inner and outer bands. Film effectiveness can be improved significantly with surface angle improvement, which further reduces needed cooling flow. Airflows also often contain dust particles that can accumulate within airfoil film holes or within the interior of the airfoil, which can block cooling air from passing through effectively, reduce the cooling benefit provided by the film holes, or reduce the effectiveness of the cooling air due to the insulating effects of accumulated dust. A reduction in supplied cooling air can therefore reduce the amount of dust encountering the airfoil, making the airfoil more dust-tolerant in operation.

It should be understood that application of the disclosed design is not limited to turbine engines with fan and booster sections, but is applicable to turbojets and turboshaft engines as well.

To the extent not already described, the different features and structures of the various embodiments can be used in combination, or in substitution with each other as desired.

That one feature is not illustrated in all of the embodiments is not meant to be construed that it cannot be so illustrated, but is done for brevity of description. Thus, the various features of the different embodiments can be mixed and matched as desired to form new embodiments, whether or not the new embodiments are expressly described. All combinations or permutations of features described herein are covered by this disclosure.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. An airfoil for a turbine engine comprising:
   a body having an outer wall defining a pressure side and a suction side opposite the pressure side, the outer wall enclosing an interior and extending axially between a truncated nose and a trailing edge; and
   a shield positioned upstream of the nose to define a leading edge for the airfoil, with the shield spaced from the nose to define a gap between the body and the shield.
2. The airfoil of any preceding clause, wherein the shield further comprises an apex that defines the leading edge.
3. The airfoil of any preceding clause, wherein the shield further comprises an upstream surface and a downstream surface, where the downstream surface confronts the nose.
4. The airfoil of any preceding clause, wherein the shield further comprises at least one internal cooling passage.
5. The airfoil of any preceding clause, wherein the shield further comprises at least one film hole extending from the at least one internal cooling passage to one of the upstream surface or downstream surface.
6. The airfoil of any preceding clause, wherein the shield further comprises at least one film hole extending from the downstream surface to the upstream surface.
7. The airfoil of any preceding clause, wherein the body further comprises at least one cooling hole fluidly coupling the interior of the body to the gap.
8. The airfoil of any preceding clause, wherein the body further comprises at least one cooling hole fluidly coupling the interior of the body to the gap.
9. The airfoil of any preceding clause, wherein the gap is continuous.
10. The airfoil of any preceding clause, wherein the gap comprises multiple discrete gaps.
11. The airfoil of any preceding clause, wherein a span-wise extent of the shield is greater than or equal to a span of the nose.
12. The airfoil of any preceding clause, wherein the shield has at least a portion being made of a material with a higher temperature capability than the body.
13. The airfoil of any preceding clause, wherein the at least a portion includes the leading edge.
14. The airfoil of any preceding clause, wherein the at least a portion includes the entire shield.
15. An airfoil assembly for a turbine engine comprising:
   radially spaced inner and outer bands; and
   a plurality of airfoils extending between the inner and outer bands, with at least one of the airfoils comprising:
      a body having an outer wall defining a pressure side and a suction side opposite the pressure side, the outer wall enclosing an interior and extending axially between a truncated nose and a trailing edge; and
      a shield positioned upstream of the nose to define a leading edge for the airfoil, with the shield spaced from the nose to define a gap between the body and the shield.
16. The airfoil assembly of any preceding clause, wherein the shield is mounted between the inner and outer bands.
17. The airfoil assembly of any preceding clause, wherein the shield mounts to one of the inner band and outer band via a tongue and groove.
18. The airfoil assembly of any preceding clause, wherein the shield comprises the tongue, and the one of the inner band and outer band comprises the groove.
19. The airfoil assembly of any preceding clause, wherein the shield further comprises an apex that defines the leading edge.
20. The airfoil assembly of any preceding clause, wherein the shield further comprises an upstream surface and a downstream surface, where the downstream surface confronts the nose.
21. The airfoil assembly of any preceding clause, wherein the shield further comprises at least one film hole extending from the downstream surface to the upstream surface.
22. The airfoil assembly of any preceding clause, wherein the body further comprises at least one cooling hole fluidly coupling the interior of the body to the gap.
23. The airfoil assembly of any preceding clause, wherein the body further comprises at least one cooling hole fluidly coupling the interior of the body to the gap.
24. The airfoil assembly of any preceding clause, wherein the gap is continuous.
25. The airfoil assembly of any preceding clause, wherein the gap comprises multiple discrete gaps.
26. The airfoil assembly of any preceding clause, wherein a span-wise extent of the shield is greater than or equal to a span of the nose.
27. The airfoil assembly of any preceding clause, wherein the shield has at least a portion being made of a material with a higher temperature capability than the body.
28. The airfoil assembly of any preceding clause, wherein the at least a portion includes the leading edge.
29. The airfoil assembly of any preceding clause, wherein the at least a portion includes the entire shield.
30. A method of cooling an airfoil in a turbine engine, the method comprising:
   flowing cooling air through film holes in a shield spaced upstream of an airfoil body.
31. The method of any preceding clause, further comprising flowing cooling air from an interior of the airfoil body into a gap between the shield and the airfoil body, and then into the film holes.
32. The method of any preceding clause, further comprising flowing a portion of the cooling air in the gap along a portion of the airfoil body.
33. The method of any preceding clause, wherein the portion of the airfoil body is at least one of a pressure side or a suction side of the airfoil body.
34. The method of any preceding clause, wherein the flowing air through the film holes comprises flowing air from an interior of the shield.

## Claims

1. An airfoil (105, 205) for a turbine engine (10) comprising:
a body (110, 210) having an outer wall (111, 211) defining a pressure side (112, 212) and a suction side (114, 214) opposite the pressure side (112, 212), the outer wall (111, 211) enclosing an interior (138, 238) and extending axially between a truncated nose (116, 216) and a trailing edge (118, 218); and
a shield (120, 220) positioned upstream of the nose (116, 216) to define a leading edge (122, 222) for the airfoil (105, 205), with the shield (120, 220) spaced from the nose (116, 216) to define a gap (124, 224) between the body (110, 210) and the shield (120, 220);
**characterized in that** the shield (120) comprises shield surface features (150) and the nose (116) comprises nose surface features (152), wherein the shield surface features (150) and the nose surface features (152) comprise mutually complementary profiles, wherein the nose (116) comprises a plurality of cooling passages through the nose surface features (152), and wherein the shield is made from a material having higher temperature capability than the body.

2. The airfoil (105, 205) of claim 1, wherein the shield (120, 220) further comprises an apex (134, 234) that defines the leading edge (122, 222).

3. The airfoil (105, 205) of either of claim 1 or 2, wherein the shield (120, 220) further comprises an upstream surface (130, 230) and a downstream surface (132, 232), where the downstream surface (132, 232) confronts the nose (116, 216).

4. The airfoil (105, 205) of claim 3, wherein the shield (120, 220) further comprises at least one film hole (136, 236) extending from the at least one internal cooling passage (237) to one of the upstream surface (130, 230) or downstream surface (132, 232).

5. The airfoil (105, 205) of any of claims 3 to 4, wherein the shield (120, 220) further comprises at least one film hole (136, 236) extending from the downstream surface (132, 232) to the upstream surface (130, 230).

6. The airfoil (105, 205) of any preceding claim, wherein the body (110, 210) further comprises at least one cooling hole (140, 240) fluidly coupling the interior of the body (110, 210) to the gap (124, 224).

7. The airfoil (105, 205) of any of claims 1 to 6, wherein the gap (124, 224) is continuous.

8. The airfoil (105, 205) of any of claims 1 to 6, wherein the gap comprises multiple discrete gaps.

9. The airfoil (105, 205) of any preceding claim, wherein a span-wise extent (142) of the shield (120, 220) is greater than or equal to a span (144) of the nose (116, 216).

10. A method of cooling an airfoil in a turbine engine, the airfoil being in accordance with any preceding claim, the method comprising:
flowing cooling air through film holes in the shield spaced upstream of the airfoil body.

11. The method of claim 10, further comprising flowing cooling air from an interior of the airfoil body into a gap between the shield and the airfoil body, and then into the film holes.

12. The method of claim 10 or 11, further comprising flowing a portion of the cooling air in the gap along a portion of the airfoil body.

13. The method of claim 12, wherein the portion of the airfoil body is at least one of a pressure side or a suction side of the airfoil body.
